Europäisches Patentamt

European Patent Office

Office européen des brevets

(19)

(11) **EP 0 641 696 B1**

(12) **FASCICULE DE BREVET EUROPEEN**

(45) Date de publication et mention
de la délivrance du brevet:
**11.06.1997 Bulletin 1997/24**

(51) Int. Cl.⁶: **B60S 1/08**

(21) Numéro de dépôt: **94113036.1**

(22) Date de dépôt: **20.08.1994**

(54) **Vitre, notamment pare-brise pour véhicule automobile, comportant un dispositif ultrasonore intégré pour la détection de corps étrangers présents sur une de ses faces**

Glasscheibe, insbesondere eine Kraftfahrzeug-Windschutzscheibe, mit integrierter Detektoranordnung zum Erfassen von Fremdkörpern auf einer Oberfläche

Window, notably a windscreen for a motor vehicle, with an integrated ultrasonic device for detecting foreign matter on one of its surfaces

(84) Etats contractants désignés:
**CH DE ES FR GB IT LI NL SE**

(30) Priorité: **03.09.1993 FR 9310584**

(43) Date de publication de la demande:
**08.03.1995 Bulletin 1995/10**

(73) Titulaire: **ASULAB S.A.**
**CH-2501 Bienne (CH)**

(72) Inventeurs:
• **Saurer, Eric**
**CH-2022 Bevaix (CH)**

• **Duthé, Bernard**
**CH-1436 Chamblon (CH)**
• **Jeanmonod, Roland**
**CH-2000 Neuchâtel (CH)**

(74) Mandataire: **de Montmollin, Henri et al**
**ICB**
**Ingénieurs Conseils en Brevets SA**
**Rue des Sors 7**
**2074 Marin (CH)**

(56) Documents cités:
**EP-A- 0 512 653**   **DE-A- 3 528 009**
**US-A- 4 827 198**

## Description

L'invention concerne une vitre et plus particulièrement, un pare-brise comportant un dispositif ultrasonore intégré pour la détection de corps étrangers présents sur une de ses faces.

On connaît déjà différents dispositifs pour détecter la présence de corps étrangers présents à la surface d'une vitre. Le plus souvent, on tire parti du fait que la transmission d'une onde (onde optique, élastique, ou autre) dans le matériau de la vitre se trouve affectée par une modification du milieu dans lequel la vitre se trouve.

Ainsi, dans le cas du pare-brise d'un véhicule automobile, l'amplitude de l'écho d'un signal ultrasonore se propageant dans l'épaisseur du pare-brise et se réfléchissant sur sa face extérieure peut être plus ou moins atténuée en fonction de l'état de surface d'une des parois du pare-brise. La détection de cette variation d'amplitude est donc représentative de la présence de corps étrangers à la surface du pare-brise et permet en conséquence de fournir un signal de commande exploitable, par exemple pour enclencher ou déclencher un dispositif de nettoyage.

La demande de brevet EP-A-0 512 653 propose un dispositif de nettoyage à commande automatique, notamment pour pare-brise de véhicule automobile, qui utilise ce principe et dans lequel un transducteur ultrasonore réalisant les fonctions d'émission et de réception est directement collé sur la surface intérieure d'un pare-brise.

Ce dispositif fonctionne de façon satisfaisante lorsqu'il est associé à des pare-brises dits symétriques, c'est-à-dire comportant deux plaques de verre de même épaisseur assemblées par une couche de liaison telle qu'une couche de polyvinylbutadiène (PVB).

En effet, lorsqu'un transducteur met en vibration deux plaques de verre réunies par une couche de liaison (couche de PVB), la transmission de l'onde incidente à travers la plaque de verre directement en contact avec le transducteur est maximale quand l'épaisseur de cette plaque est un multiple entier de la demi-longueur d'onde de l'onde incidente se propageant dans la plaque.

Par ailleurs, pour obtenir la sensibilité optimale à la détection de corps étrangers présents à la surface de la plaque de verre éloignée du transducteur, il est nécessaire que l'amplitude de la vibration de cette plaque de verre soit maximale. Or, cette condition n'est réalisée que si la fréquence de résonance de la plaque de verre en question est sensiblement égale à la fréquence de l'onde émise par le transducteur ou à un multiple entier de celle-ci. En d'autres termes, $f_1 = c/2e_1$ doit être égale à K fois $f = c/\lambda$, $f_1$ étant la fréquence de résonance de la plaque éloignée du transducteur, c étant la vitesse de l'onde imposée par le transducteur dans le verre, $e_1$ étant l'épaisseur de ladite plaque, f étant la fréquence de résonance du transducteur, $\lambda$ la longueur d'onde du signal émis par le transducteur dans le verre et K un nombre entier. Par conséquent, on voit que les conditions ci-dessus sont remplies quand $e_1 = K. \lambda/2$.

On comprend donc qu'il est aisé dans le cas d'un pare-brise symétrique, de choisir un transducteur émettant un signal dont la longueur d'onde est adaptée à l'épaisseur identique de chacune des plaques de verre formant le pare-brise.

En revanche, il ressort de ce qui vient d'être exposé plus haut que les conditions optimales de fonctionnement d'un tel dispositif ne sont plus remplies dès que le transducteur est appliqué sur un pare-brise dit asymétrique, c'est-à-dire comportant deux plaques de verre d'épaisseurs différentes assemblées par une couche de liaison telle qu'une couche de PVB.

Ces pare-brise asymétriques équipant une certaine catégorie d'automobiles, il est donc également intéressant de pouvoir équiper ces derniers d'un dispositif de nettoyage à commande automatique tel que celui décrit dans la demande de brevet EP-A-0 512 653.

Ainsi, l'invention a pour but principal de remédier aux inconvénients de l'art antérieur susmentionné en fournissant une vitre équipée d'un dispositif de détection ultrasonore de corps étrangers présents sur une de ses faces et qui présente une grande sensibilité de détection.

A cet effet l'invention a pour objet une vitre telle que définie par la revendication 1 du brevet.

Grâce à ces caractéristiques, la transmission de l'onde ultrasonore s'effectue seulement à travers la première plaque de sorte que l'on évite les pertes et les perturbations induites par la couche de liaison et on peut ainsi aisément choisir un transducteur émettant un signal dont la longueur d'onde dans le verre est adaptée à l'épaisseur de la plaque de verre de la vitre avec laquelle il est directement en contact, à savoir, avec la première plaque.

Des modes de réalisation de l'invention sont précisés dans les revendications dépendantes 2 à 10.

D'autres caractéristiques et avantages de l'invention apparaîtront plus clairement à la lecture de la description suivante de plusieurs modes de réalisation de l'invention donnés à titre purement illustratif et non limitatif, cette description étant faite en liaison avec le dessin dans lequel:

- la figure 1 montre un schéma de principe d'un exemple de système de nettoyage d'un pare-brise à commande automatique utilisant une vitre selon l'invention;
- la figure 2 est une représentation schématique en coupe d'un premier mode de réalisation d'une vitre selon l'invention; et
- la figure 3 est une représentation schématique en coupe d'un deuxième mode de réalisation d'une vitre selon l'invention.

La description de l'invention va être faite dans le cadre d'une application avantageuse à l'élimination de corps étrangers humides tels que la pluie, la neige, la boue, etc., présents à la surface d'une vitre telle qu'un pare-brise asymétrique pour véhicule automobile.

Par pare-brise ou vitre asymétrique, on comprendra dans la suite de la description une vitre composite comprenant au moins une première plaque ayant une première épaisseur, et une deuxième plaque ayant une deuxième épaisseur, les deux plaques étant assemblées par une couche de liaison qui peut être réalisée sous la forme d'une couche pleine ou d'un cadre. Les premières et deuxièmes épaisseurs peuvent selon le cas être égales ou différentes, mais l'invention présente un plus grand intérêt avec des plaques d'épaisseurs différentes pour les raisons présentées ci-dessus.

Toutefois, il va de soi que l'invention n'est nullement limitée à cette application et qu'elle pourra être avantageusement utilisée dans le cadre de tout autre application à la détection de tout corps étranger présent à la surface d'une vitre comprenant plusieurs plaques réalisées dans un matériau capable de transmettre un signal ultrasonore.

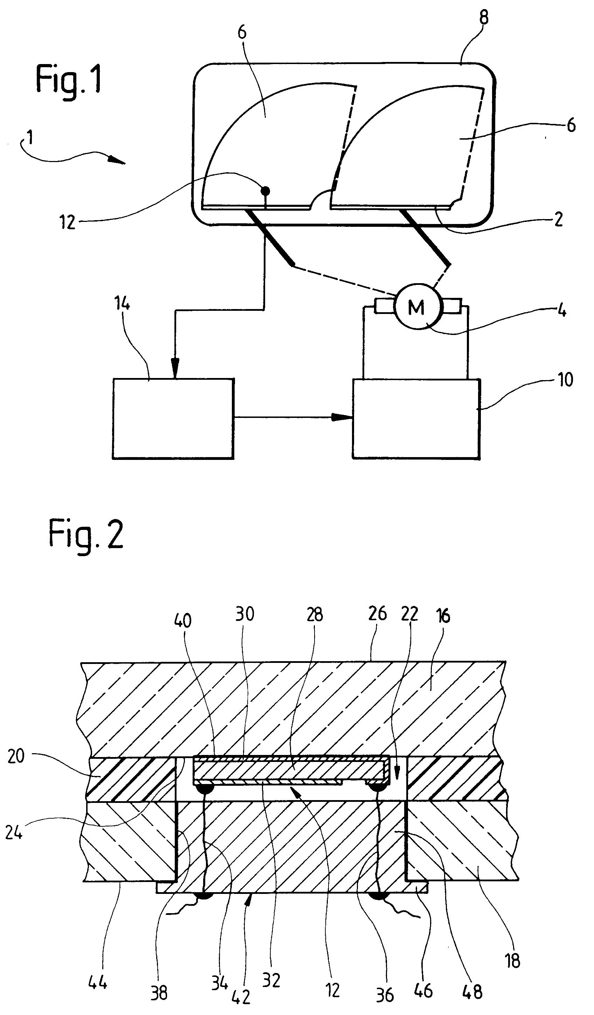

En se référant à la figure 1 on voit un système classique de nettoyage à commande automatique d'essuieglace désigné par la référence générale 1. Le système 1 comprend des essuie-glaces 2 couplés mécaniquement à un moteur 4. Lorsque les essuie-glaces 2 sont actionnés, ils balaient respectivement des zones 6, en forme de secteur circulaire, d'un pare-brise 8. Des moyens d'actionnement 10, connectés au moteur 4, permettent d'enclencher et/ou de déclencher le moteur.

La commande automatique des essuie-glaces est réalisée à l'aide du dispositif de détection 12 placé en regard d'une des zones 6. Le dispositif de détection 12 coopère avec un circuit de commande 14 susceptible de fournir un signal de commande approprié aux moyens d'actionnement 10 en réponse à un signal de détection provenant du dispositif de détection 12.

En se référant maintenant à la figure 2, on voit en coupe un premier mode de réalisation d'une vitre ou parebrise 8 selon l'invention dans lequel est intégré le dispositif de détection 12 qui fournit un signal de détection représentatif de la présence de corps étrangers à la surface extérieure du pare-brise 8.

La vitre ou pare-brise 8 comprend une première plaque 16 et une deuxième plaque 18 assemblées par une couche de liaison 20. Dans l'exemple décrit, les plaques 16 et 18 sont réalisées en verre, et la couche de liaison 20, est réalisé en un polymère tel que le polyvinylbutadiène (PVB).

Selon l'invention le dispositif de détection 12 est disposé entre les plaques 16 et 18 dans un évidement 22 ménagé dans la couche de liaison 20 et est directement appliqué sur une face 24 de la plaque 16 opposée à une face 26 de cette même plaque, la face 26 étant la face de la vitre ou pare-brise en contact avec les corps étrangers à détecter. Le dispositif de détection 12 comprend un transducteur piézoélectrique 28 utilisé en émission et en réception, par exemple en forme de pastille, qui est muni d'électrodes d'excitation 30, 32 isolées l'une de l'autre, et destinées à être respectivement reliées au circuit de commande 14 via des conducteurs 34, 36.

Le dispositif de détection 12 coopère donc directement par sa face émettrice/réceptrice comportant l'électrode 30 avec la face 24 de la première plaque 20 pour détecter la présence de corps étrangers sur la face 24 de la première plaque opposée à la première face.

L'évidement 22 présente bien entendu des formes et des dimensions correspondantes à celles du dispositif de détection 12. Dans ce mode de réalisation, la plaque 18 comprend une ouverture 38 traversante disposée sensiblement en regard de l'évidement 22. Cette ouverture permet l'accès à la face 24 via l'évidement 22 pour réaliser l'installation du dispositif de détection 12.

A ce propos, on notera que le transducteur 28 est fixé au moyen d'un film de colle 40 sur la face 24 ou de tout autre moyen approprié tel que le soudage. On précisera que pour éviter les réflexions parasites et une trop grande absorption du signal ultrasonore émis par le transducteur 28 aux interfaces transducteur 28/film de colle 40 et film de colle 40/plaque 16, le film de colle 40 présente une épaisseur très faible par rapport à la longueur d'onde $\lambda$ du signal émis par le transducteur dans la plaque 16. Typiquement, la demanderesse a constaté que l'utilisation d'un film de colle ayant une épaisseur inférieure ou égale à $\lambda/20$ conduit à des résultats satisfaisants.

Pour fixer les idées, avec une fréquence du signal émis par le transducteur de l'ordre de 4MHz, un film de colle ayant une épaisseur inférieure ou égale à $15 \times 10^{-6}$ m donne de bons résultats.

Afin de réaliser une transmission et une réception uniforme et efficace des signaux ultrasonores émis et reçus par le transducteur, on veillera à ce qu'aucune bulles d'air ne soit présente aux interfaces transmettant les signaux.

L'ouverture 38 est fermée par un bouchon 42 à travers lequel s'étendent les conducteurs 34, 36 qui courent ensuite sur une face 44 de la plaque 18 pour se connecter aux moyens de commande 14. Le bouchon 42 présente une collerette 46 qui s'appuie sur la face 44 et une partie 48 qui pénétre dans l'ouverture 38. On notera que la partie 48 du bouchon 42 présente une longueur telle qu'il existe une espace libre suffisant entre l'extrémité libre de cette partie et la face du transducteur portant l'électrode 32 pour que ce dernier vibre convenablement.

Le bouchon 42 est par exemple réalisée en matière plastique telle que le polychlorure de vinyle (PVC)

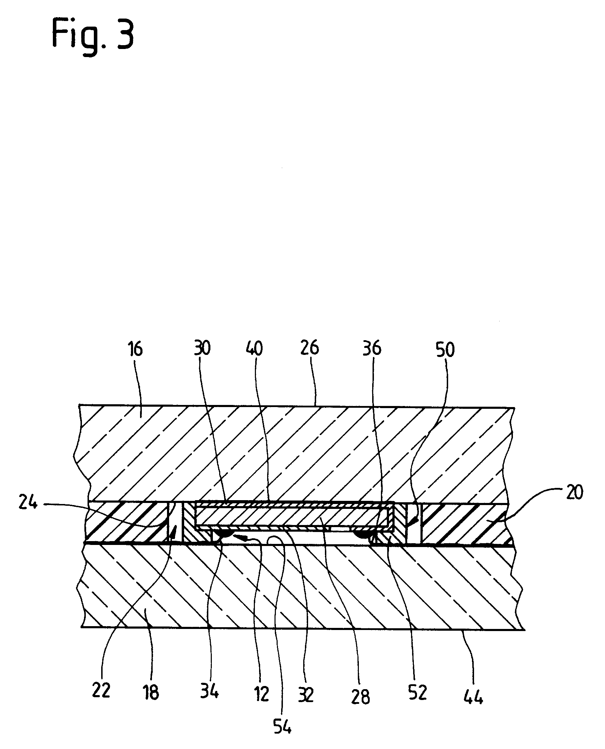

En se référant maintenant à la figure 3, on voit un deuxième mode de réalisation de l'invention dans lequel les mêmes éléments que ceux représentés aux figures 1 et 2 sont désignés par les mêmes références numériques.

A la différence du premier mode de réalisation la plaque 18 ne comprend pas l'ouverture 38, et le dispositif de détection 12 est disposé dans l'évidement 22 ménagé dans la couche de liaison 20 par l'intermédiaire d'un espaceur jouant le rôle de boîtier 50 dont le fond 52 est partiellement évidé pour permettre la vibration du transducteur 28. L'espaceur 50 maintient le dispositif de détection 12 appliqué contre la face 24 de la plaque 16 et rigidifie les plaques 16 et 18 à l'endroit de l'évidement 22. Le boîtier 50 assure en outre une protection du dispositif de détection 12 et notamment une protection des connections des électrodes 30, 32 et des conducteurs 34, 36.

Dans ce mode de réalisation, les conducteurs 34 et 36 s'étendent sur la face 54 opposée à la face 44 de la plaques 18 jusqu'au moyens de commande 14.

Pour fixer les idées, avec une vitre ou un pare-brise asymétrique classique, la plaque 16, qui est destinée à venir en contact avec l'extérieur du véhicule présente typiquement une épaisseur de l'ordre de 2,5 mm, tandis que la plaque 18, qui est destinée à venir en contact avec l'intérieur du véhicule, présente typiquement une épaisseur de l'ordre de 2,0 mm. La couche de liaison présente quant à elle une épaisseur typique de 0,75 mm.

En pratique, l'invention peut donc être mise en oeuvre selon le mode de réalisation, soit en rapportant le transducteur 28 sur la face 24 de la plaque 16 après avoir prévu à la fabrication de la vitre ou du pare-brise l'évidement 22 et l'ouverture 38, soit en installant le transducteur 28 dans l'espaceur 50 dans l'évidement 22 prévu dans la couche de liaison au moment de la fabrication de la vitre ou du pare-brise et en fermant l'évidement à l'aide de la plaque 18.

**Revendications**

1. Vitre comprenant au moins une première plaque (16), une deuxième plaque (18), lesdites plaques (16, 18) étant assemblées par une couche de liaison (20), cette vitre comprenant en outre un dispositif de détection ultrasonore (12) pour détecter la présence de corps étrangers sur la surface extérieure de la vitre, ledit dispositif (12) comprenant un transducteur (28) pouvant émettre, via une face émettrice/réceptrice un signal ultrasonore incident dans la vitre, ledit transducteur pouvant recevoir, via ladite face émettrice/réceptrice un signal ultrasonore réfléchi représentatif de la présence ou de l'absence desdits corps étrangers pour élaborer un signal de détection, la vitre étant caractérisée en ce que le dispositif de détection ultrasonore (12) est disposé entre lesdites plaques (16, 18) et coopère directement avec une première face (24) de ladite première plaque (16), la surface extérieure de la vitre étant constituée par la deuxième face (26) de ladite première plaque (16) opposée à ladite première face (24) et en ce que ledit transducteur (28) peut émettre, via ladite face émettrice/réceptrice, un signal ultrasonore incident d'une longueur d'onde λ dans ladite première plaque (16), l'épaisseur de ladite première plaque étant égale à Kλ/2, où K est un nombre entier.

2. Vitre selon la revendication 1, caractérisée en ce que la couche de liaison (20) comprend un évidement (22) dans lequel s'étend ledit dispositif ultrasonore (12).

3. Vitre selon la revendication 2, caractérisée en ce que la deuxième plaque (18) comprend un ouverture traversante (38) qui s'étend sensiblement en regard dudit évidement (22).

4. Vitre selon la revendication 3, caractérisée en ce que ladite ouverture (38) est fermée par un bouchon (42).

5. Vitre selon la revendication 4, dans lequel ledit dispositif de détection ultrasonore (12) comprend un transducteur piézoélectrique (28) muni d'électrodes (30,32) et de conducteurs (34,36) reliant ces électrodes (30,32) à un circuit de détection, caractérisée en ce que lesdits conducteurs (34,36) s'étendent à travers le bouchon (42) pour ensuite s'étendre sur une face (44) de la deuxième plaque (18).

6. Vitre selon la revendication 2, caractérisée en ce que ledit évidement (22) est fermé par la deuxième plaque (18).

7. Vitre selon la revendication 6, caractérisée en ce que ledit dispositif de détection (12) est disposé dans un espaceur formant boîtier (50) dont le fond (52) est partiellement évidé, ledit espaceur (50) étant maintenu entre la première et la deuxième plaque (16,18).

8. Vitre selon l'une des revendications précédentes, caractérisée en ce que ledit dispositif de détection (12) est fixé à ladite première face (24) au moyen d'un film de colle (40).

9. Vitre selon l'une des revendications 1 à 7, caractérisée en ce que ledit dispositif de détection (12) est fixé à ladite première face (24) par soudage.

10. Vitre selon l'une des revendications précédentes, caractérisée en ce que ladite première plaque (16) a une première épaisseur et en ce que ladite deuxième plaque (18) a une deuxième épaisseur différente de ladite première épaisseur.

**Claims**

1. Window comprising at least a first sheet (16), a second sheet (18), said sheets (16, 18) being joined together by a connecting layer (20), such window further comprising an ultrasonic detection device (12) for detecting the presence of foreign bodies on the exterior surface of the window, said device (12) comprising a transducer (28) able to emit, via a transmitting/receiving face, an incidental ultrasonic signal in the window, said transducer being able to receive, via said transmitting/receiving face, a reflected ultrasonic signal representative of the presence or absence of said foreign bodies to generate a detection signal, the window being characterized in that the ultrasonic detection device (12) is placed between said sheets (16, 18) and co-operates directly with a first face (24) of said first sheet (16), the exterior surface of the window being constituted by the second face (26) of said first sheet (16) opposite said first face (24) and in that said transducer (28) is able to emit, via said transmitting/receiving face, an incidental ultrasonic signal having a wavelength $\lambda$ in said first sheet (16), the thickness of said first sheet being equal to $K.\lambda/2$, where K is an integral number.

2. Window according to claim 1, characterized in that the connecting layer (20) comprises a recess (22) in which extends said ultrasonic detection device (12).

3. Window according to claim 2, characterized in that the second sheet (18) comprises a through opening (38) which extends approximately facing said recess.

4. Window according to claim 3, characterized in that said opening (38) is closed by a cap (42).

5. Window according to claim 4, in which said ultrasonic detection device (12) comprises a piezoelectric transducer (28) provided with electrodes (30,32) and conductors (34,36) connecting said electrodes (30,32) to a detection circuit, characterized in that said conductors (34,36) extend across the cap (42) in order then to extend over a face (44) of the second sheet (18).

6. Window according to claim 2, characterized in that said recess (22) is closed by the second sheet (18).

7. Window according to claim 6, characterized in that said detection device (12) is placed in a spacer forming a case (50) whose base (52) is partially cut away, said spacer being supported between the first and the second sheet (16,18).

8. Window according to any of the preceding claims, characterized in that said detection device (12) is fixed onto said first face (24) by means of a film of glue (40).

9. Window according to any of claims 1 to 7, characterized in that said detection device (12) is fixed onto said first face (24) by welding

10. Window according to any of the preceding claims, characterized in that said first sheet (16) is of a first thickness and in that said second sheet (18) has a second thickness different from said first thickness.

**Patentansprüche**

1. Sicherheitsscheibe, umfassend mindestens eine erste Scheibe (16), eine zweite Scheibe (18), welche Scheiben (16, 18) durch eine Verbindungsfolie (20) gefügt sind, welche Sicherheitsscheibe ferner eine Ultraschall-Erfassungsvorrichtung (12) für das Erfassen des Vorhandenseins von Fremdkörpern auf der Außenoberfläche der Sicherheitsscheibe umfaßt, welche Vorrichtung (12) einen Wandler (28) umfaßt, der über eine Sende-/Empfangsseite ein in die Scheibe eintretendes Ultraschallsignal erzeugen und über die Sende-/Empfangsseite ein reflektiertes Ultraschallsignal, das für das Vorhandensein oder die Abwesenheit der Fremdkörper repräsentativ ist, empfangen kann, um ein Erfassungssignal zu erzeugen, welche Sicherheitsscheibe dadurch gekennzeichnet ist, daß die Ultraschall-Erfassungsvorrichtung (12) zwischen den Scheiben (16, 18) angeordnet ist und direkt mit einer ersten Seite (24) der ersten Scheibe (16) zusammenwirkt, wobei die Außenoberfläche der Sicherheitsscheibe von der zweiten Seite (26) der ersten Scheibe (16) gegenüber der ersten Seite (24) gebildet ist, und daß der Wandler (28) über die Sende-/Empfangsseite ein eingespeistes Ultraschallsignal mit einer Wellenlänge in die erste Scheibe (16) aussenden kann, wobei die Dicke der ersten Scheibe gleich $K\lambda/2$ ist mit K als einer ganzen Zahl.

2. Sicherheitsscheibe nach Anspruch 1, dadurch gekennzeichnet, daß die Verbindungsfolie (20) eine Ausnehmung (22) aufweist, in die sich die Ultraschallvorrichtung (12) erstreckt.

3. Sicherheitsscheibe nach Anspruch 2, dadurch gekennzeichnet, daß die zweite Scheibe (18) eine Queröffnung (38) aufweist, die sich im wesentlichen gegenüber der Ausnehmung (22) erstreckt.

4. Sicherheitsscheibe nach Anspruch 3, dadurch gekennzeichnet, daß die Öffnung (38) durch einen Stopfen (42) verschlossen ist.

5. Sicherheitsscheibe nach Anspruch 4, bei der die Ultraschall-Erfassungsvorrichtung (12) einen piezoelektrischen Wandler (28), versehen mit Elektroden (30, 32) und diese Elektroden (30, 32) mit einem Erfassungsschaltkreis verbindenden Leitern (34, 36) umfaßt, dadurch gekennzeichnet, daß die Leiter (34, 36) sich durch den Stopfen (42) erstrecken, um sich dann auf einer Seite (44) der zweiten Scheibe (18) zu erstrecken.

6. Sicherheitsscheibe nach Anspruch 2, dadurch gekennzeichnet, daß die Ausnehmung (22) durch die zweite Scheibe (18) verschlossen ist.

7. Sicherheitsscheibe nach Anspruch 6, dadurch gekennzeichnet, daß die Erfassungsvorrichtung (12) in einem ein Gehäuse (50) bildenden Distanzstück angeordnet ist, dessen Boden (52) teilweise ausgenommen ist, welches Distanzstück (50) zwischen der ersten und der zweiten Scheibe (16, 18) gehalten ist.

8. Sicherheitsscheibe nach einem der vorangehenden Ansprüche, dadurch gekennzeichnet, daß die Erfassungsvorrichtung (12) an der ersten Seite (24) mittels einer Klebefolie (40) befestigt ist.

9. Sicherheitsscheibe nach einem der Ansprüche 1 bis 7, dadurch gekennzeichnet, daß die Erfassungsvorrichtung (12) an der ersten Seite (24) durch Verlöten befestigt ist.

10. Sicherheitsscheibe nach einem der vorangehenden Ansprüche, dadurch gekennzeichnet, daß die erste Scheibe (16) eine erste Dicke aufweist und daß die zweite Scheibe (18) eine zweite, von der ersten Dicke unterschiedliche Dicke hat.

Fig.1

Fig.2

## Fig. 3